# EUROPEAN PATENT APPLICATION

(11) **EP 3 754 365 A1**
(43) Date of publication of application: **23.12.2020**
(21) Application number: 19767255.3
(22) Date of filing: 08.03.2019
(51) Int. Cl.: G01S 7/481, G01N 21/3586, G01N 21/49, G02B 26/10

(54) **SCANNING DEVICE AND MEASURING DEVICE**

(30) Priority: 15.03.2018 JP 2018047576
(71) Applicant: Pioneer Corporation, Tokyo 113-0021 (JP)
(72) Inventor: YAMAGUCHI, Atsushi, Kawagoe-shi, Saitama 350-8555 (JP)
(74) Representative: Manitz Finsterwald Patent- und Rechtsanwaltspartnerschaft mbB
(86) International application number: PCT/JP2019/009219
(87) International publication number: WO 2019/176749

(57) **Abstract**

There is provided a light source unit, a deflecting unit, and an optical system. The light source unit is configured to emit a pulse light. The deflecting unit is configured to deflect the pulse light in a directionally variable manner and emit the pulse light as a scanning light. The optical system is disposed on an optical path of the scanning light. The optical system is configured to project the scanning light to a predetermined region. The optical system includes a telecentric lens. The scanning light enters the telecentric lens. The optical system is configured to adjust a projection direction of the scanning light that has passed through the telecentric lens.

## Description

### TECHNICAL FIELD

The present invention relates to a scanning device that performs light scanning and a measuring device that optically detects an object and measures its property.

### BACKGROUND ART

There has been conventionally known a scanning device that sets an object or a region as a target for scanning and scans this target with light. Additionally, there has been known a measuring device that uses optical information obtained by this scanning device to measure various kinds of properties of this target for scanning. For example, Patent Document 1 discloses an optical radar device that measures a range to a measurement object based on elapsed time from irradiation of a light from a light projecting unit until reception of a reflected light by a light receiving unit.

### PRIOR ART DOCUMENTS

### PATENT LITERATURE

Patent Document 1: Japanese Unexamined Patent Application Publication No. 2007-85832

### SUMMARY OF THE INVENTION

### PROBLEMS TO BE SOLVED BY THE INVENTION

For example, this scanning device projects a pulse light to a predetermined region and receives a light reflected by the object present in this predetermined region to obtain optical information of this object as scanning information. Therefore, considering acquisition of the accurate scanning information, it is preferred that the light reflected by this object can be surely received.

For example, when the scanning device is, for example, mounted on a vehicle as a vehicle radar, there may be a case where this object has various kinds of shapes and sizes, or this object possibly has moved. The scanning device preferably can project the light that can be surely received even such various kinds of objects.

The present invention has been made in consideration of the above-described points and an object of which is to provide a scanning device and a measuring device configured to obtain accurate optical information from various kinds of objects.

### SOLUTIONS TO THE PROBLEMS

The invention according to claim 1 includes a light source unit, a deflecting unit, and an optical system. The light source unit is configured to emit a pulse light. The deflecting unit is configured to deflect the pulse light in a directionally variable manner and emit the pulse light as a scanning light. The optical system is disposed on an optical path of the scanning light. The optical system is configured to project the scanning light to a predetermined region. The optical system includes atelecentric lens. The scanning light enters the telecentric lens. The optical system is configured to adjust a projection direction of the scanning light that has passed through the telecentric lens.

The invention according to claim 8 includes the scanning device according to claim 1, a light receiving unit, and a measuring unit. The light receiving unit is configured to receive a reflected light. The reflected light is produced by reflecting the scanning light by an object in the predetermined region and causing the scanning light to pass through the optical system. The measuring unit is configured to measure a property of the object based on a light reception result of the reflected light by the light receiving unit.

### BRIEF DESCRIPTION OF THE DRAWINGS

FIG. 1 is a drawing illustrating a configuration of a measuring device according to Embodiment 1.
FIG. 2 is a drawing illustrating a configuration of an optical system of a scanning device in the measuring device according to Embodiment 1.
FIG. 3 is a drawing illustrating a configuration of an optical system of a scanning device in the measuring device according to Embodiment 1.
FIG. 4 and FIG. 5 is a drawing illustrating a configuration of an optical system of a scanning device in a measuring device according to Embodiment 2.
FIG. 5 is a drawing illustrating a configuration of an optical system of a scanning device in a measuring device according to Embodiment 2.
FIG. 6 is a drawing illustrating a configuration of an optical system of a scanning device in a measuring device according to Embodiment 3.

### DESCRIPTION OF PREFERRED EMBODIMENTS

Embodiments of the present invention will be described in detail below.

### Embodiment 1

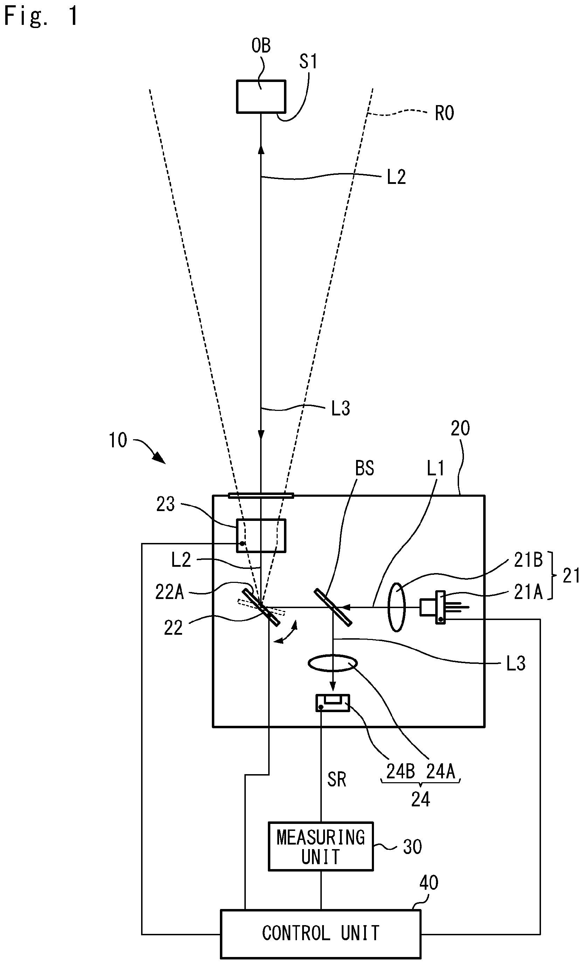

FIG. 1 is a drawing schematically illustrating a configuration of an optical measuring device (hereinafter simply referred to as a measuring device) 10 according to Embodiment 1. The overall configuration of the measuring device 10 will be described using FIG. 1. In this embodiment, the measuring device 10 is an optical device that performs light scanning of a predetermined region (hereinafter referred to as a scanning region) R0, detects an object OB present in the scanning region R0, and measures and analyzes a range to the object OB, a shape of the object OB, and the like.

The measuring device 10 includes a scanning unit 20, a measuring unit 30, and a control unit 40. The scanning unit 20 scans the scanning region R0 using a light. The measuring unit 30 performs various kinds of measurements regarding the object OB using the scanning information obtained by the scanning unit 20. The control unit 40 controls the scanning unit 20 and the measuring unit 30.

The scanning unit 20 includes a light source unit 21 that generates and emits a pulsed light (hereinafter referred to as an emitted light) L1. In this embodiment, the light source unit 21 includes a light-emitting element 21A and a shaping lens 21B. The light-emitting element 21A generates a pulsed laser light having a peak wavelength in an infrared region. The shaping lens 21B shapes this laser light and emits this shaped laser light as the emitted light L1.

Further, the scanning unit 20 includes a deflecting unit 22. While the deflecting unit 22 deflects the emitted light L1 from the light source unit 21 in a directionally variable manner, the deflecting unit 22 emits the emitted light L1 as a scanning light (projection signal) L2. The deflecting unit 22 continuously and periodically changes the deflection direction of the emitted light L1.

In this embodiment, the deflecting unit 22 includes a movable light reflecting surface 22A that causes the emitted light L1 from the light source unit 21 to be reflected. For example, the deflecting unit 22 is a Micro Electro Mechanical Systems (MEMS) mirror configured such that this light reflecting surface 22A swings around at least one axis.

The scanning unit 20 includes an optical system 23 that projects the scanning light L2 to the scanning region R0. The optical system 23 adjusts a projection direction of the scanning light L2. The scanning light L2 adjusted by the optical system 23 is projected to the scanning region R0.

Note that the scanning region R0 is a virtual three-dimensional space having an angle range corresponding to a projectable range of the scanning light L2 by the optical system 23 and a depth corresponding to a range that allows the scanning light L2 to maintain its intensity at which ranging is possible. FIG. 1 illustrates a part of outer edges of the scanning region R0 by the dashed lines.

For example, as illustrated in FIG. 1, when the object OB is present on an optical path of the scanning light L2 in the scanning region R0, the surface on the scanning unit 20 side of the object OB (hereinafter referred to as a target surface) S1 is irradiated with the scanning light L2. When the object OB is an object that has reflectivity to the scanning light L2, the scanning light L2 is reflected by the object OB.

The scanning unit 20 includes a light receiving unit 24. The scanning light L2 is reflected by the object OB, and the light that has passed through the optical system 23 (a light receiving signal, hereinafter referred to as a reflected light L3) is received by the light receiving unit 24. In this embodiment, the light receiving unit 24 includes a condenser lens 24A that receives and condenses the reflected light L3 and a detecting element 24B that detects the reflected light L3. The detecting element 24B performs photoelectric conversion on the reflected light L3 and generates an electrical signal according to the reflected light L3 as a detection signal SR.

In this embodiment, the scanning unit 20 includes a beam splitter BS that is disposed between the deflecting unit 22 and the light source unit 21 and separates the emitted light L1 from the reflected light L3 to guide the reflected light L3 to the light receiving unit 24. The beam splitter BS transmits the emitted light L1, and the emitted light L1 proceeds to the deflecting unit 22.

In other words, in this embodiment, the scanning unit 20 functions as a light projecting unit that projects the scanning light L2 and also functions as a light receiving unit that receives the reflected light L3. The optical system 23 functions as a light projecting/receiving optical system that projects the scanning light L2 and receives the reflected light L3. The scanning unit 20 generates and outputs the detection signal SR, which is the light reception result of the reflected light L3, as the scanning information of the scanning region R0.

The measuring unit 30 measures the range to the object OB, the shape of the target surface S1 of the object OB, and the like based on the detection signal SR generated by the scanning unit 20. For example, in this embodiment, the measuring unit 30 is a ranging unit that measures the range from the scanning unit 20 to the target surface S1 of the object OB.

For example, the measuring unit 30 detects a pulse corresponding to the reflected light L3 in the detection signal SR. For example, the measuring unit 30 measures the range to the target surface S1 of the object OB by time-of-flight method based on a time difference between the emission of the emitted light L1 and the reception of this reflected light L3. The measuring unit 30 generates range data indicative of the ranges to the object OB.

In this embodiment, the measuring unit 30 partitions the scanning region R0 into a plurality of pixel regions based on the projection direction of the scanning light L2 and generates a map-like image (range image) indicative of the range data of each of these pixel regions.

The measuring unit 30 may employ a change cycle of the deflection direction of the emitted light L1 by the deflecting unit 22 or a change cycle of the projection direction of the scanning light L2 by the optical system 23 as a generation cycle of the range image and may periodically generate the range image. The measuring unit 30 may include a display unit (not illustrated) that displays these range images as a moving image in a time-series .

The control unit 40 performs operational control on the scanning unit 20 (the light source unit 21, the deflecting unit 22, the optical system 23, and the light receiving unit 24) and the measuring unit 30. For example, in this embodiment, the control unit 40 supplies a driving signal to the light source unit 21 and drives and controls the light source unit 21. The control unit 40 supplies a driving signal to the deflecting unit 22 and controls a displacement operation of the light reflecting surface 22Aof the deflecting unit 22. The control unit 40 controls the operation of the optical system 23 and controls the projection direction of the scanning light L2.

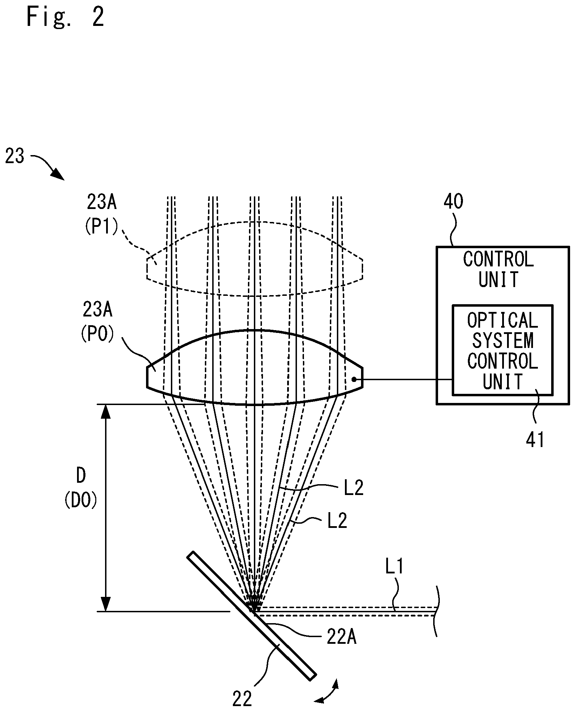

FIG. 2 is a drawing schematically illustrating the configurations of the optical system 23 and the control unit 40. In this embodiment, the optical system 23 includes a telecentric lens 23A which the scanning light L2 enters. In this embodiment, the telecentric lens 23A is formed of a telecentric fθ lens.

The telecentric lens 23A has a configuration in which the telecentric lens 23A is movable on the optical path of the scanning light L2 so that a distance D between the deflecting unit 22 (the light reflecting surface 22A in this embodiment) and the telecentric lens 23A changes. Specifically, the telecentric lens 23A is configured to be movable between a first position P0 and a second position P1 in a direction along the main optical axis of the scanning light L2. In this embodiment, the control unit 40 includes an optical system control unit 41 that controls the position of the telecentric lens 23A.

FIG. 2 is a drawing schematically illustrating the respective optical paths of the scanning lights L2 when the telecentric lens 23A is disposed at the first position P0. The light source unit 21 emits an emitted light L1, for example, at a predetermined cycle. The scanning light L2 is generated whenever this emitted light L1 enters the deflecting unit 22. Therefore, actually, all of the scanning lights L2 do not enter the telecentric lens 23A, simultaneously. Therefore, the five solid lines indicated in FIG. 2 are schematic illustration of respective principal beams (for example, straight lines connecting centers of light fluxes) of the five scanning lights L2 generated in a predetermined period.

In the actual measuring device 10, the emitted light L1 from a light source unit 21 has a predetermined beam diameter. The scanning light L2 generated by the deflecting unit 22 is projected to the scanning region R0 while this beam diameter is changed. FIG. 2 illustrates an optical path range considering the change in beam diameter in each scanning light L2 by the dashed line.

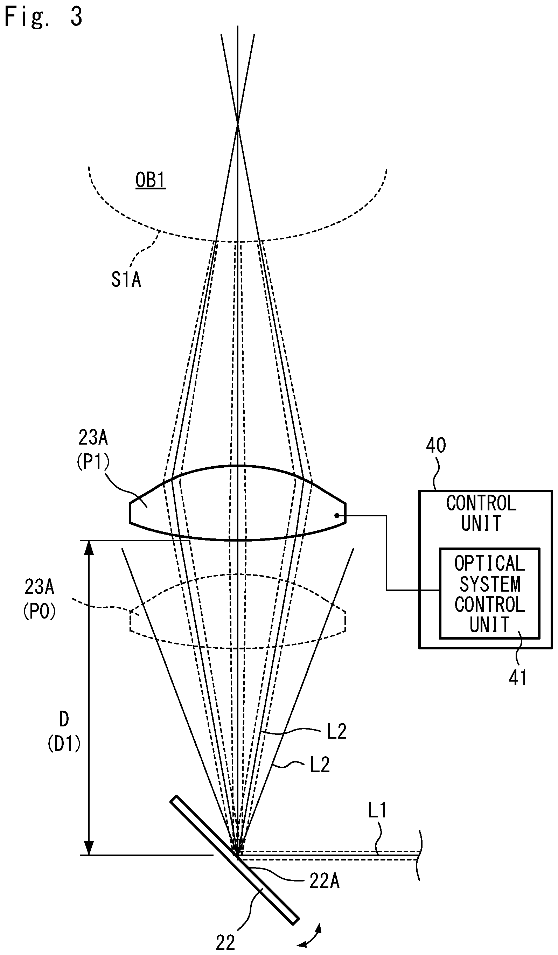

For example, the dashed lines in FIG. 2 each indicate a course of a light having intensity smaller than that of the principal beam of the scanning light L2 by predetermined intensity (for example, the half intensity) and are hereinafter referred to as sub beams. FIG. 3, FIG. 4, FIG. 5, and FIG. 6 described later also indicate the respective principal beams of the scanning lights L2 by solid lines and indicate the sub beams by dashed lines. The scanning light L2 is projected to the scanning region R0 while being condensed by the telecentric lens 23A.

Hereinafter, unless otherwise specified, the optical axis of the scanning light L2 means the principal beam of the scanning light L2. The projection direction of the scanning light L2 means the direction along the optical axis or the principal beam of the scanning light L.

As illustrated in FIG. 2, when the telecentric lens 23A is disposed at the first position P0 (the position where the distance D from the deflecting unit 22 becomes a first distance D0), the scanning lights L2 are parallelized by the telecentric lens 23A regardless of an incident angle to the telecentric lens 23A. Specifically, the scanning lights L2 enter various kinds of regions in the incidence plane of the telecentric lens 23A at various kinds of timings and various kinds of angles. On the other hand, in a case where the telecentric lens 23A is disposed at the first position P0, when these scanning lights L2 are projected to the scanning region R0, their projection directions are parallel to one another.

FIG. 3 is a drawing schematically illustrating optical paths of the scanning lights L2 in a case where the telecentric lens 23A is disposed at a second position P1, which is a position different from the first position P0. In the example illustrated in FIG. 3, the telecentric lens 23A is disposed at a position as the second position P1 where the distance D from the deflecting unit 22 becomes a distance D1 larger than the distance D0. That is, in the example illustrated in FIG. 3, the telecentric lens 23A is disposed at the position apart from the deflecting unit 22 farther than the first position P0.

As illustrated in FIG. 3, when the telecentric lens 23A is disposed at the second position P1, the respective scanning lights L2 are projected in directions different from one another from the telecentric lens 23A. For example, the scanning lights L2 that have entered the telecentric lens 23A are emitted from the telecentric lens 23A such that their optical axes intersect in the scanning region R0.

That is, in this embodiment, when the telecentric lens 23A is disposed at the first position P0, the optical system 23 constitutes a telecentric optical system. On the other hand, when the telecentric lens 23A is disposed at a second position P1, a telecentric property of the optical system 23 is lost.

In other words, in this embodiment, the telecentric lens 23A as the optical system 23 has a first projection mode (for example, an operation mode corresponding to the state disposed at the first position P0) and a second projection mode (forexample, the operation mode corresponding to the state disposed at the second position P1). In the first projection mode, the projection directions of the scanning lights L2 are adjusted such that the respective optical axes of the scanning lights L2 become parallel to one another within the predetermined period. In the second projection mode, the projection directions of the scanning lights L2 are adjusted such that the optical axes of the scanning lights L2 intersect in the scanning region R0 within the predetermined period.

As illustrated in FIG. 3, assume a case where an object OB1 having a target surface S1A that protrudes toward the scanning unit 20 is present on the optical path of the scanning light L2 when the telecentric lens 23A is disposed at the second position P1. In this case, as illustrated in FIG. 3, there is a high possibility that the scanning lights L2 enter the wide range of the target surface S1A of the object OB1 while being condensed at angles close to perpendicularity (while the principal beams and the sub beams approach one another).

Among the reflected lights L3 reflected by the target surface S1A, this light corresponding to the scanning light L2 that has entered the target surface S1A at the angle close to the perpendicularity traces the optical path close to the scanning light L2 and returns to the optical system 23. Accordingly, the light receiving unit 24 can receive the lights that have entered the wide range of the target surface S1A.

For example, as illustrated in FIG. 2, when the target surface S1A is irradiated with the scanning lights L2 with the telecentric lens 23A disposed at the first position P0, a part of the reflected light L3 proceeds in a direction different from the scanning light L2 in some cases. Therefore, there may be a case where a part of the reflected light L3 reflected by the target surface S1A is not received by the light receiving unit 24 and a region where the scanning result cannot be obtained may occur in the target surface S1A.

Thus, in this embodiment, by adjusting the position of the telecentric lens 23A, even when, for example, the target surface S1A having the protruding surface shape is present in the scanning region R0, the reflected lights L3 can be received from the wide range of the target surface S1A. Therefore, the scanning information can be obtained from the wide range of the target surface S1A (object OB1), and thus the object OB1 can be accurately measured.

For example, considering accurately obtaining the scanning information from the target surfaces S1 having various kinds of shapes, the telecentric lens 23A may be configured to move continuously and periodically. Forexample, by obtaining another piece of information regarding the scanning region R0, for example, an image captured by an external imaging device or the like, the position where the telecentric lens 23A is to be disposed may be calculated and the position of the telecentric lens 23A may be adjusted using it by the optical system control unit 41 in the control unit 40.

In this embodiment, the case where the telecentric lens 23A has a first state in which the respective optical axes of the scanning lights L2 projected within the predetermined period become parallel and the second state in which the respective optical axes of the scanning lights L2 projected within the predetermined period intersect in the scanning region R0 has been described. This simplifies the process of the detection signal SR when the projection direction of the scanning light L2 changes. However, the telecentric lens 23A only needs to be configured to adjust the projection direction of the scanning light L2, and, for example, the telecentric lens 23A only needs to be movable such that the distance D from the deflecting unit 22 changes as in this embodiment.

In this embodiment, the case where the deflecting unit 22 is the MEMS mirror has been described. However, the deflecting unit 22 only needs to emit the emitted light L1 from the light source unit 21 while deflecting the emitted light L1 in a directionally variable manner. For example, the deflecting unit 22 may be a movable polygon mirror, a galvanometer mirror, or a lens.

In this embodiment, the case where the telecentric lens 23A moves by control by the control unit 40 has been described. That is, in this embodiment, for example, the scanning unit 20 includes amovingmechanism (not illustrated) that forms a movement path of the telecentric lens 23A and generates moving force to move the telecentric lens 23A.

However, the telecentric lens 23A may be manually moved by an operator who operates the scanning unit 20. For example, a plurality of housing cases configured to removably house the telecentric lens 23A may be disposed inside the scanning unit 20. For example, a plurality of the removable telecentric lenses 23A may be disposed in the optical paths of the scanning lights L2. In other words, it is only necessary that the optical system 23 includes the telecentric lens 23A, which the scanning light L2 enters, and can adjust the projection direction of the scanning light L2 that has passed through the telecentric lens 23A.

Thus, in this embodiment, the measuring device 10 includes the light source unit 21 that emits the emitted light L1, the deflecting unit 22 that emits the emitted light L1 as the scanning light L2 while deflecting the emitted light L1 in a directionally variable manner, the optical system 23 that projects the scanning light L2 to the scanning region (predetermined region) R0, and the light receiving unit 24. The scanning light L2 is reflected by the object OB in the scanning region R0, and the reflected light L3 that has passed through the optical system 23 is received by the light receiving unit 24. Additionally, it is only necessary that the optical system 23 includes the telecentric lens 23A into which the scanning light L2 enters, and adjusts the projection direction of the scanning light L2 that has passed through the telecentric lens 23A. Accordingly, the measuring device 10 that can obtain the accurate optical information from various kinds of the objects OB to accurately measure their properties can be provided.

In this embodiment, the case where the measuring device 10 includes the light receiving unit 24 that receives the reflected light L3 that has passed through the optical system 23 has been described. However, the measuring device 10 needs not to include the light receiving unit 24. For example, a light receiving unit that directly receives the reflected light L3 not passing through the optical system 23 may be disposed outside the scanning unit 20, and this light receiving unit may receive the reflected light L3.

In this embodiment, the case where the reflected light L3 is used for a measurement application, such as ranging, has been described. However, the reflected light L3 is usable for other applications. That is, the measuring device 10 needs not to include the measuring unit 30. In this case, for example, the scanning unit 20 and the control unit 40 function as the scanning device. The scanning unit 20 may autonomously operate, not by the control unit 40. Therefore, the scanning unit 20 including, for example, the light source unit 21, the deflecting unit 22, and the optical system 23 serves as the scanning device that can obtain the accurate optical information from various kinds of the objects OB.

The application of the measuring device 10 includes, for example, a ranging device that is mounted on a moving body, such as a vehicle, and detects an object near the vehicle and measures a range to this object. In this case, for example, detection accuracy and ranging accuracy of a columnar-shaped object, such as a utility pole, is considered to be improved. Additionally, the light reflecting surface 22A of the deflecting unit 22 configured to swing around the two axes allows two-dimensional scanning to the scanning region R0. Therefore, detection accuracy of objects having various kinds of surface shapes, such as a spherical object, is considered to be improved.

However, for example, the use of a terahertz wave as the scanning light L2 (emitted light L1) and irradiating the various kinds of objects as the object OB with this terahertz wave allow the measuring device 10 to be used as an analyzer that analyzes an internal structure, a material, and the like of this object OB. In this case, the measuring unit 30 may measure the terahertz wave by, for example, time-domain spectroscopy method. In this case as well, even the objects OB having various kinds of surface shapes, the scanning information can be accurately obtained and accurate analysis can be performed.

### Embodiment 2

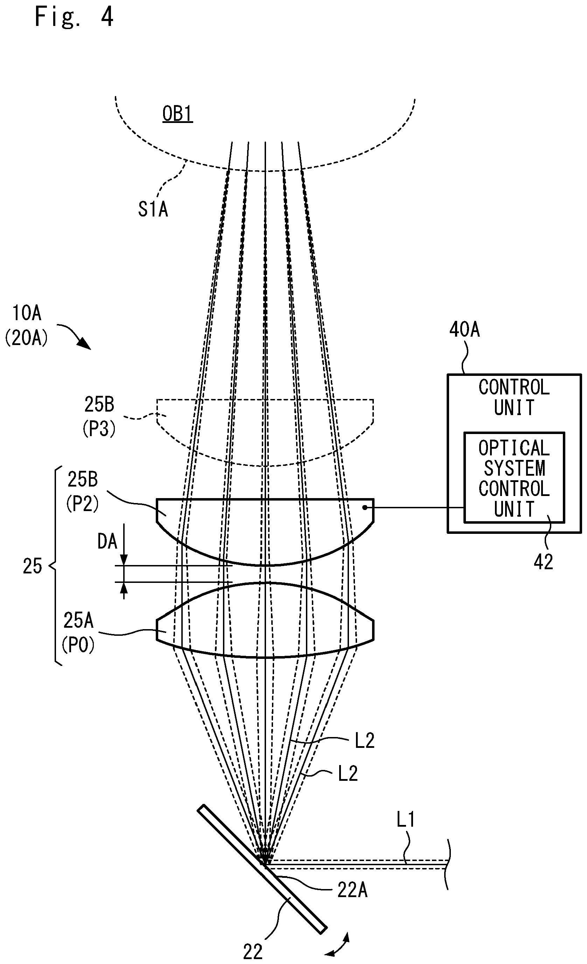

FIG. 4 is a drawing schematically illustrating configurations of a scanning unit 20A and a control unit 40A in a measuring device 10A according to Embodiment 2. Except for the configurations of the scanning unit 20A and the control unit 40A, the measuring device 10A has the configuration similar to that of said measuring device 10. Except for a configuration of an optical system 25, the scanning unit 20A has the configuration similar to that of said scanning unit 20. Except that an optical system control unit 42 is provided, the control unit 40A has the configuration similar to that of said control unit 40.

The optical system 25 in the scanning unit 20A includes a telecentric lens 25A, which the scanning light L2 enters, and a convex lens 25B, which the scanning light L2 that has passed through the telecentric lens 25A enters. In this embodiment, in the optical system 25, the movement of the convex lens 25B on the optical path of the scanning light L2 allows changing a distance DA between the convex lens 25B and the telecentric lens 25A. In this embodiment, the control unit 40A includes the optical system control unit 42 that controls the position of the convex lens 25B.

In this embodiment, the convex lens 25B is movable between a first position P2 and a second position P3 on the optical path of the scanning light L2 by the optical system control unit 42. Thus, the distance DA between the convex lens 25B and the telecentric lens 25A changes.

In this embodiment, the telecentric lens 25A has the configuration similar to said telecentric lens 23A disposed at the first position P0. Therefore, the respective scanning lights L2 enter the convex lens 25B along directions parallel to one another. After the telecentric lens 25A transmits the respective scanning lights L2, the scanning lights L2 enter the convex lens 25B while being condensed (while the beam diameters are gradually narrowed) . On the other hand, after the convex lens 25B transmits the scanning light L2, the scanning light L2 is projected to the scanning region R0 so as to pass through a focal point of the convex lens 25B according to the position of the convex lens 25B.

FIG. 4 is a drawing schematically illustrating the optical path of the scanning light L2 when the convex lens 25B is disposed at the first position P2. As illustrated in FIG. 4, when the convex lens 25B is disposed at the first position P2, similarly to the case illustrated in FIG. 3, the scanning lights L2 are projected such that the respective optical axes intersect in the scanning region R0. Accordingly, for example, even when a object OB1 having the target surface S1A with the protruding surface shape is present on the optical path of the scanning light L2, the reflected lights L3 can be received from the wide range of the target surface S1A.

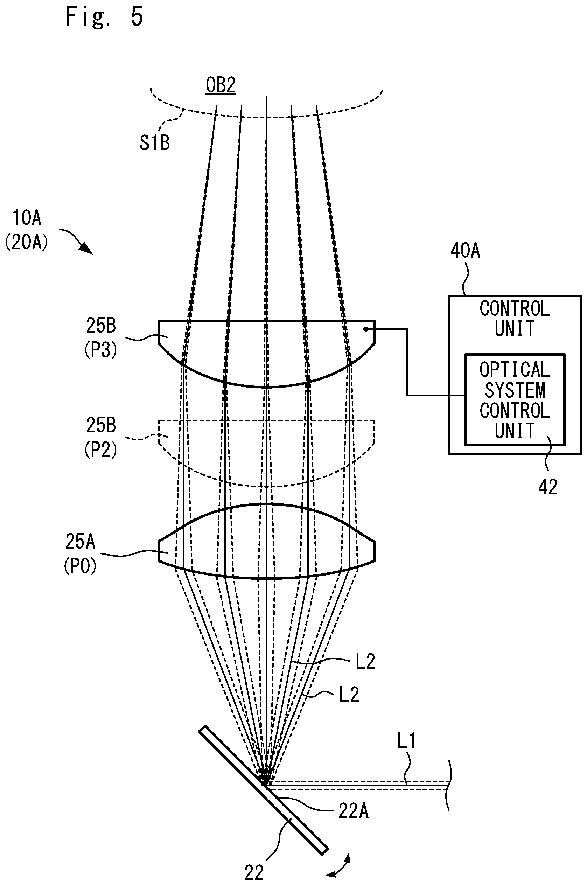

FIG. 5 is a drawing schematically illustrating the optical path of the scanning light L2 when the convex lens 25B is disposed at the second position P3. In this embodiment, the larger the distance DA between the convex lens 25B and the telecentric lens 25A is, the smaller the beam diameter of the scanning light L2 entering the convex lens 25B. Therefore, when the convex lens 25B is disposed at the second position P3, which is the position apart from the telecentric lens 25A farther than the first position P2, a difference in condensation distance between the respective scanning lights L2 and the convex lens 25B becomes close.

Therefore, as illustrated in FIG. 5, in a case where an object OB2 having a target surface S1B with a protruding surface shape having a curvature smaller than that of the object OB1 is present on the optical paths of the scanning lights L2, the scanning lights L2 can enter the wide range of the target surface S1B in the direction close to perpendicularity while being condensed. Therefore, the reflected lights L3 can be received from the wide range. That is, adjusting the position of the convex lens 25B allows obtaining the accurate scanning information of, for example, the target surface S1 with the protruding surface shape having a different curvature as well.

In this embodiment, the position of the telecentric lens 25A is fixed. This reduces the scanning lights L2 that do not enter the telecentric lens 25A due to the position of the telecentric lens 25A. Therefore, the scanning lights L2 by a stable amount of light pass through the telecentric lens 25A and the convex lens 25B and are projected to the obj ect OB. Therefore, decrease in amount of light of the scanning lights L2 can be reduced.

In this embodiment, the case where the movement of the convex lens 25B changes the distance DA from the telecentric lens 25A has been described. However, the optical system 25 only needs to be configured to adjust the projection direction of the scanning light L2. Therefore, the convex lens 25B may be fixed and the telecentric lens 25A may be moved. Alternatively, both of the telecentric lens 25A and the convex lens 25B may be moved.

Thus, in this embodiment, the optical system 25 includes the convex lens 25B, which the scanning light L2 that has passed through the telecentric lens 25A enters. The optical system 25 can change the distance between the telecentric lens 25A and the convex lens 25B. Accordingly, the scanning device (scanning unit 20A) and the measuring device 10A configured to obtain the accurate optical information from various kinds of the objects OB can be provided.

### Embodiment 3

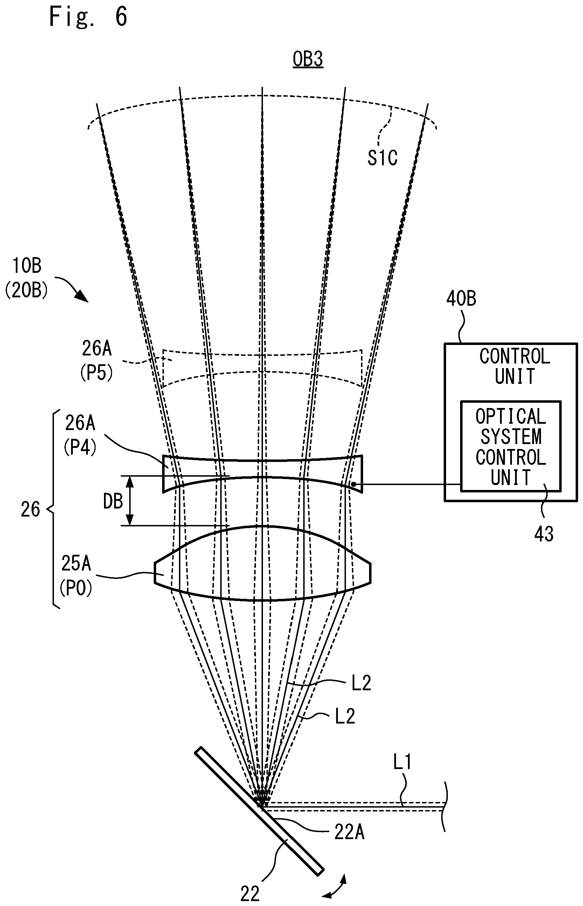

FIG. 6 is a drawing schematically illustrating configurations of a scanning unit 20B and a control unit 40B of a measuring device 10B according to Embodiment 3. Except for the configurations of the scanning unit 20B and the control unit 40B, the measuring device 10B has the configuration similar to that of said measuring device 10A. Except for a configuration of an optical system 26, the scanning unit 20B has the configuration similar to that of said scanning unit 20A. Except that an optical system control unit 43 is provided, the control unit 40B has a configuration similar to that of said control unit 40A.

Instead of the convex lens 25B, the optical system 26 of the scanning unit 20B includes a concave lens 26A, which the scanning light L2 that has passed through the telecentric lens 25A enters. In this embodiment, the concave lens 26A is movable between a first position P4 and a second position P5 on the optical path of the scanning light L2. Thus, a distance DB between the concave lens 26A and the telecentric lens 25A changes. In this embodiment, the control unit 40B includes the optical system control unit 43 that controls the position of the convex lens 25B.

In this embodiment, after the concave lens 26A transmits the scanning lights L2, the scanning lights L2 are projected to the scanning region R0 while proceeding in a direction diverging from the optical system 26. In this embodiment, for example, in a case where an object OB3 having a target surface S1C depressed toward the scanning unit 20B is present on the optical paths of the scanning lights L2, the scanning lights L2 can enter the wide range of the target surface S1C in the direction close to perpendicularity while being condensed. Therefore, the reflected lights L3 can be received from the wide range of the target surface S1C.

In this embodiment as well, since the telecentric lens 25A is fixed, most of the scanning lights L2 pass through the telecentric lens 25A and the concave lens 26A and are projected to the object OB. Accordingly, the accurate scanning information can be stably obtained from the wide range of the target surface S1C.

In this embodiment as well, the optical system 26 only needs to have the configuration in which the distance DB between the telecentric lens 25A and the concave lens 26A is changeable. Therefore, the configuration is not limited to the configuration in which the concave lens 26A moves. The telecentric lens 25A may be moved, or both of the concave lens 26A and the telecentric lens 25A may be moved.

Thus, in this embodiment, the optical system 26 includes the concave lens, which the scanning light L2 that has passed through the telecentric lens 25A enters, and has the configuration that can change the distance DB between the telecentric lens 25A and the concave lens 26A. Accordingly, the scanning device (scanning unit 20B) and the measuring device 10B configured to obtain the accurate optical information from various kinds of the objects OB can be provided.

### REFERENCE SIGNS LIST

- 10, 10A, 10B: measuring devices
- 20, 20A, 20B: scanning units
- 21: light source unit
- 22: deflecting unit
- 23, 25, 26: optical systems

## Claims

1. A scanning device comprising:
a light source unit configured to emit a pulse light;
a deflecting unit configured to deflect the pulse light in a directionally variable manner and emit the pulse light as a scanning light; and
an optical system disposed on an optical path of the scanning light, the optical system being configured to project the scanning light to a predetermined region, wherein
the optical system includes a telecentric lens, the scanning light enters the telecentric lens, and the optical system is configured to adjust a projection direction of the scanning light that has passed through the telecentric lens.

2. The scanning device according to claim 1, wherein
the telecentric lens is movable on the optical path of the scanning light.

3. The scanning device according to claim 1, wherein
the optical system includes a convex lens, the scanning light that has passed through the telecentric lens enters the convex lens, and
the optical system is configured to change a distance between the telecentric lens and the convex lens.

4. The scanning device according to claim 3, wherein
the convex lens is movable on the optical path of the scanning light.

5. The scanning device according to any one of claims 1 to 4, wherein
the optical system has a first projection mode and a second projection mode, the projection directions of the scanning lights are adjusted such that respective optical axes of the scanning lights projected in a predetermined period become parallel to one another in the first projection mode, and the projection directions of the scanning lights are adjusted such that the optical axes of the scanning lights projected in a predetermined period intersect in the predetermined region in the second projection mode.

6. The scanning device according to claim 1, wherein
the optical system includes a concave lens, the scanning light that has passed through the telecentric lens enters the concave lens, and
the optical system is configured to change a distance between the telecentric lens and the concave lens.

7. The scanning device according to claim 6, wherein
the concave lens is movable on the optical path of the scanning light.

8. A measuring device comprising:
the scanning device according to any one of claims 1 to 7;
a light receiving unit configured to receive a reflected light, the reflected light being produced by reflecting the scanning light by an obj ect in the predetermined region and causing the scanning light to pass through the optical system; and
a measuring unit configured to measure a property of the object based on a light reception result of the reflected light by the light receiving unit.
